# FASCICULE DE BREVET EUROPEEN

(11) **EP 3 867 545 B1**
(45) Date de publication et mention de la délivrance du brevet: **28.12.2022**
(21) Numéro de dépôt: 19829273.2
(22) Date de dépôt: 13.11.2019
(51) Int. Cl.: F16D 65/54

(54) **RESSORT DE RAPPEL DE PLAQUETTE DE FREIN COMPORTANT UNE PINCE ECROUIE**
BREMSKLOTZ MIT RÜCKSTELLFEDER AUSGESTATTET MIT KALTVERFORMTER KLAMMER
BRAKE PAD RETURN SPRING PROVIDED WITH COLD WORKED CLAMP

(30) Priorité: 29.11.2018 FR 1872091
(43) Date de publication de la demande: 25.08.2021
(73) Titulaire: Hitachi Astemo France, 93700 Drancy (FR)
(72) Inventeur: KONGO KONDE, Ange, 49100 ANGERS (FR); LABARRE, Xavier, 49250 SAINT GEORGES DU BOIS (FR); ESNEE, Didier, 72000 LE MANS (FR); BONNEC, Jean-Louis, 49130 LES PONTS DE CE (FR)
(74) Mandataire: Brevalex
(86) Numéro de dépôt international: PCT/FR2019/052693
(87) Numéro de publication internationale: WO 2020/109693

(56) Documents cités:
- WO-A1-2014/029840
- WO-A1-2017/112570
- CN-U- 204 610 634
- FR-A1- 3 027 080
- FR-A1- 3 027 080
- FR-A1- 3 033 378

## Description

### DOMAINE TECHNIQUE

L'invention se rapporte à un ressort de rappel d'une plaquette de frein équipant un étrier de frein à disque, avec rattrapage de l'usure de cette plaquette par déformation plastique de ce ressort.

### ÉTAT DE LA TECHNIQUE ANTÉRIEURE

Un frein à disque comporte un disque de freinage chevauché par une chape fixe portant un d'étrier qui porte deux plaquettes de part et d'autre du disque un actionneur hydraulique ou électrohydraulique apte à agir sur ces plaquettes pour qu'elles enserrent le disque afin d'exercer un couple de freinage.

La chape fixe porte les deux plaquettes en leur permettant de coulisser selon une direction axiale, et l'étrier est porté par la chape de manière à être flottant selon la direction axiale du disque. L'étrier s'étend de part et d'autre des plaquettes et il porte l'actionneur situé en vis-à-vis de l'une de ces plaquettes.

L'actionneur comporte un piston mobile pouvant venir en appui sur l'une des plaquettes lorsqu'il est activé, et grâce au montage flottant l'étrier, l'autre plaquette vient alors en appui sur la face opposée du disque. Ceci permet d'équilibrer les efforts subis par l'étrier, et par là-même, les efforts presseurs exercés par les deux plaquettes sur le disque.

Lorsque l'actionneur est relâché, le piston s'écarte de la plaquette à laquelle il est associé, pour annuler l'effort de freinage exercé par les deux plaquettes.

Complémentairement, les plaquettes sont équipées de ressorts de rappel fixés à la chape qui écartent ces plaquettes du disque jusqu'à des positions de retrait maitrisées, pour assurer qu'aucun freinage résiduel, encore appelé traînée, ne subsiste après relâchement du frein.

Afin de compenser l'usure de la plaquette qu'il rappelle, un tel ressort est conçu pour se déformer plastiquement, en plus de se déformer élastiquement, comme c'est le cas dans le ressort du document FR3027080.

Concrètement, une plaquette comporte une plaque support portant à l'une de ces faces une garniture qui s'use au cours de la vie du frein, et la position de retrait de la plaque support se rapproche du disque au fur et à mesure que la garniture s'use.

D'une manière générale, la fixation d'un tel ressort de rappel à la chape est compliquée par le fait que l'espace disponible est très limité dans la région occupée par ce ressort dans le frein.

Le but de l'invention est de proposer un ressort permettant de remédier à cet inconvénient et ayant une épaisseur réduite dans ses zones de déformation plastique.

### EXPOSÉ DE L'INVENTION

A cet effet, l'invention a pour objet un ressort de rappel d'une plaquette de frein à disque dans un chape de frein à disque, le ressort étant selon la revendication 1 et étant fabriqué en tôle d'acier à ressort et configuré pour se déformer élastiquement pour rappeler la plaquette vers une position de retrait après freinage et pour se déformer plastiquement afin de compenser l'usure de la plaquette en permettant une évolution de la position de retrait au fil de l'usure de la plaquette, ce ressort de rappel comprenant une patte de fixation à la plaquette et une pince de fixation à la chape, cette pince comprenant deux bras réunis par une base pour enserrer une nervure de la chape, et dans lequel cette pince est renforcée pour accroître son effort de serrage.

Avec cette solution, la pince de fixation à la chape peut exercer un effort de serrage optimisé sur la nervure pour assurer une fixation fiable du ressort sur la chape.

Selon l'invention pince est renforcée par écrouissage.

La pince est aussi écrouie au niveau de sa base,

La base est écrouie par frappe sur une portion centrale de cette base pour en réduire l'épaisseur.

L'invention concerne alternativement un ressort dans lequel l'un des bras de la pince 3 comporte une extrémité repliée pour que sa tranche vienne en appui sur un flanc de la nervure de la chape en constituant une griffe.

Selon ce deuxième mode de réalisation de l'invention pince est renforcée en étant formée de deux épaisseurs de tôle.

L'invention concerne également un ressort ainsi défini, dans lequel la pince comporte un corps de pince prolongé par un rabat qui est emboîté sur le corps de pince.

L'invention concerne également un frein à disque comportant un ressort ainsi défini.

### BRÈVE DESCRIPTION DES DESSINS

[Fig. 1] est une vue partielle en perspective du ressort selon l'invention fixé à une nervure d'une chape de frein ;
[Fig. 2] est une vue latérale de la partie active du ressort selon l'invention dans son état relâché lorsque la plaquette qu'il équipe est neuve ;
[Fig. 3] est une vue latérale de la partie active du ressort selon l'invention dans son état relâché lorsque la plaquette qu'il équipe est usée ;
[Fig. 4] est une vue générale d'une chape de frein ;
[Fig. 5] est une vue en perspective du ressort selon l'invention ;
[Fig. 6] est une autre vue en perspective du ressort selon l'invention ;
[Fig. 7] est une courbe d'essai de traction illustrant une augmentation du domaine élastique d'un matériau par écrouissage ;
[Fig. 8] est une vue partielle en perspective du ressort selon un second mode de réalisation de l'invention fixé à une nervure de chape de frein ;
[Fig. 9] est une vue en perspective du ressort selon le second mode de réalisation de l'invention ;
[Fig. 10] est une autre vue partielle en perspective du ressort selon le second mode de réalisation de l'invention fixé à une nervure de chape de frein.

### EXPOSÉ DÉTAILLÉ DE MODES DE RÉALISATION PARTICULIERS

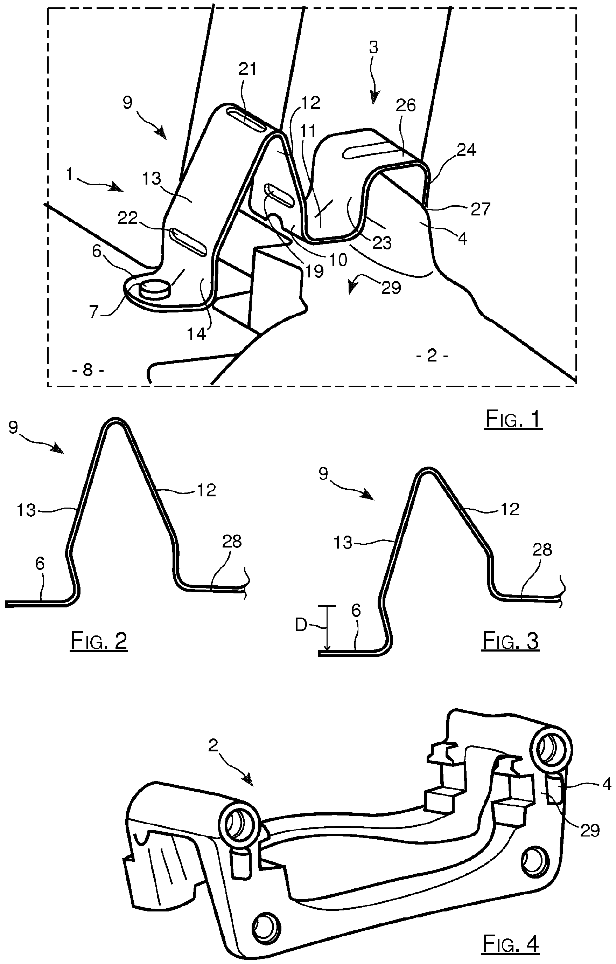

Sur la figure 1, un ressort selon l'invention repéré par 1 est formé à partir d'une lame généralement rectangulaire en tôle d'acier à ressort découpée et pliée ou emboutie, qui équipe une chape 2.

Ce ressort 1 comporte une portion fixe formant une pince de fixation 3 par laquelle il est solidarisé à une nervure 4 de la chape 2 par pincement, et une extrémité mobile sous forme d'une patte 6 qui est fixée par un rivet 7 à une plaquette de freinage 8 coulissant dans cette chape 2 en étant portée par celle-ci. La pince 3 est raccordée à la patte 6 par l'intermédiaire d'une partie déformable 9.

Cette partie déformable 9 présente en vue latérale une forme correspondant principalement à celle de la lettre V. Elle comprend une première portion droite 10 s'étendant à angle droit par rapport à une portion d'appui 11 qu'elle prolonge et par laquelle elle est raccordée à la pince 3.

Cette première portion droite 10 est prolongée par une première portion oblique 12, elle-même prolongée par une seconde portion oblique 13 prolongée par une seconde portion droite 14 prolongée par la patte 6 qui s'étend à angle droit par rapport à cette portion 14 qu'elle prolonge.

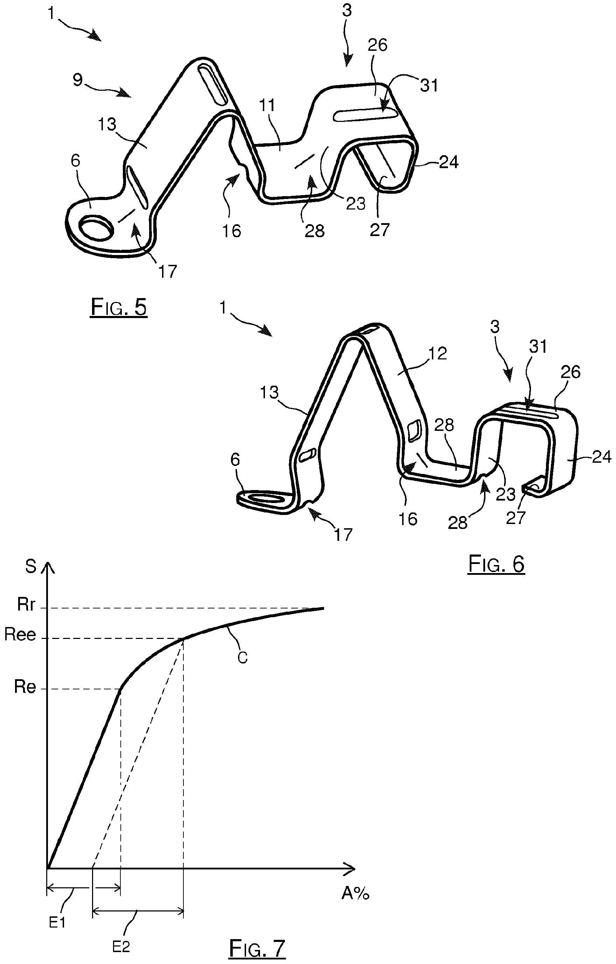

Ce ressort comporte encore des raidisseurs 16, 17 plus clairement visibles sur la figure 5. Le premier raidisseur 16 est situé à la jonction de la portion d'appui 11 avec la portion droite 10, et le deuxième raidisseur 17 est situé à la jonction de la seconde portion droite 14 avec la patte 6.

Chaque raidisseur 16, 17 est obtenu par pliage ou emboutissage pour former une nervure raidissant la pliure à angle droit constituant la jonction de deux portions contiguës, en étant formé en partie centrale de cette pliure selon une orientation perpendiculaire à celle-ci.

Comme visible sur les figures, le ressort comporte des fentes 19, 21 et 22 au niveau du raccordement de la première portion droite avec la première portion oblique, au niveau du raccordement des deux portions obliques et au niveau du raccordement de la seconde portion oblique avec la seconde portion droite. Chaque fente 19, 21 et 22 confère au ressort la capacité de se déformer de façon plastique au cours de la vie du frein. Avantageusement, et comme représenté sur les figures 5 et 6, le ressort présente une épaisseur amoindrie au niveau des fentes, qui permet de dimensionner au mieux sa capacité à se déformer de façon plastique.

Cette capacité de déformation apparaît plus clairement sur les figures 2 et 3 qui montrent que la patte de fixation 6 est plus écartée de la portion d'appui 11 lorsque la plaquette est usée que lorsqu'elle est neuve. Le décalage de cette patte 6 depuis la situation initiale avec une plaquette neuve jusqu'à une usure significative de la plaquette est représenté par la distance D sur la figure 3.

La pince 3 comporte deux bras 23 et 24 réunis par une base 26 pour enserrer la nervure 4, cette base et ces bras ayant globalement en vue de profil une forme correspondant à celle de la lettre U. Le bras 24 comporte une extrémité libre 27 correspondant à la terminaison du ressort 1 du côté de la pince 3, et qui est repliée à angle droit, en direction du bras opposé 23. Lorsque la pince 3 enserre la nervure, c'est la tranche de l'extrémité libre 27 repliée qui vient en appui sur un flanc de la nervure 4, de façon à constituer une griffe permettant d'accroître la tenue de fixation.

Le bras 23 a son extrémité opposée à la base 26 qui est repliée à angle droit en direction opposée au bras 24 pour être prolongée par la portion d'appui 11 longeant une face 29 de la chape 2 dont dépasse la nervure 4, cette portion 11 étant raccordée à la patte 6 du ressort par la partie déformable 9 de ce ressort 1. Complémentairement, un troisième raidisseur 28 est formé à la jonction de la portion d'appui 11 avec le bras 23 de la pince 3, pour rigidifier la pliure par laquelle la portion 11 est raccordée au bras 23.

Selon le premier mode de réalisation de l'invention, la base 26 de la pince 3 est écrouie, de manière à augmenter sa limite élastique par rapport au reste du ressort, c'est-à-dire de manière à étendre le domaine élastique de la base 26.

L'opération d'écrouissage est assurée en matant la base 26 avant mise en forme du ressort par cintrage et/ou pliage, pour que son épaisseur soit diminuée localement au niveau de la base 26. En pratique, l'écrouissage est assuré par frappe à plat de la tôle du ressort au niveau d'une portion centrale 31 de la base 26 de sa pince 3. En pratique, l'épaisseur de la tôle utilisée pour former le ressort est de cinq dixièmes de millimètres, et après écrouissage, la portion centrale 31 de la base 26 a une épaisseur de quatre dixièmes de millimètres.

Le fait d'étendre, grâce à l'écrouissage, le domaine élastique de la pince 3, permet d'ouvrir cette pince de manière plus importante sans déformation plastique pour pouvoir l'engager sur la nervure 4 afin qu'elle enserre plus fortement et donc plus fermement cette nervure. Autrement dit, le fait d'écrouir la base 26 permet d'accroître l'effort de serrage généré par la pince 3 enserrant la nervure 4.

Comme représenté schématiquement sur la figure 7, un élément donné tel qu'un élément en acier à ressort pour la fabrication du ressort 1, comporte un domaine élastique initial E1 dans lequel il est réversiblement déformable, et correspondant à la portion linéaire de la courbe C, et un domaine plastique dans lequel ses déformations sont irréversibles et correspondant à la portion incurvée de la courbe C.

Dans le domaine élastique, si la déformation relative A% appliquée à l'élément reste inférieure à une limite d'allongement, alors il revient à son état initial lorsqu'il est relâché. Dans le cas d'une sollicitation en traction, la déformation relative A% correspond à l'allongement de l'élément considéré divisé par sa longueur initiale.

De la même manière, dans ce domaine élastique initial, si la contrainte mécanique S subie par l'élément reste inférieure à la limite élastique initiale Rei, alors il revient à son état initial lorsqu'il est relâché. Dans le cas d'une sollicitation en traction, la contrainte S correspond à l'effort de traction divisé par la section transversale de l'élément.

Par ailleurs, si l'élément subit une contrainte comprise entre sa limite élastique initiale Rei et une limite de rupture Rr, c'est-à-dire située dans le domaine plastique, il revient à un état différent de l'état initial lorsqu'il est relâché. Enfin, s'il est soumis à une contrainte supérieure à la limite de rupture Rr, l'élément se rompt.

L'écrouissage est un traitement de fabrication s'appliquant aux métaux qui correspond à l'application temporaire d'une contrainte supérieure à la limite élastique initiale Rei et inférieure à la limite de rupture Rr. Dans le cas de l'invention, ce traitement est appliqué par frappe de la portion centrale 31. Comme représenté en pointillés sur le graphique de la figure 7, l'élément revient alors linéairement à un état différent de son état initial une fois que la contrainte d'écrouissage a été appliquée, mais sa limite élastique après écrouissage notée Ree, est supérieure à sa limite élastique initiale Rei.

Ainsi, le domaine élastique après écrouissage, noté E2, est plus étendu que le domaine élastique E1 avant écrouissage. Cela signifie que l'élément peut être sollicité de manière plus importante sans risque de le déformer de manière permanente.

L'exemple de la figure constitue une illustration du phénomène d'écrouissage dans le cas d'un élément sollicité en traction, mais le phénomène est qualitativement le même pour un élément sollicité en flexion, tel que la pince 3 du ressort 1. L'écrouissage de la pince 3 permet ainsi d'ouvrir cette pince de manière plus importante en restant dans son domaine élastique, c'est-à-dire sans risque de la déformer plastiquement, ce qui revient à accroître l'effort de serrage que cette pince peut générer.

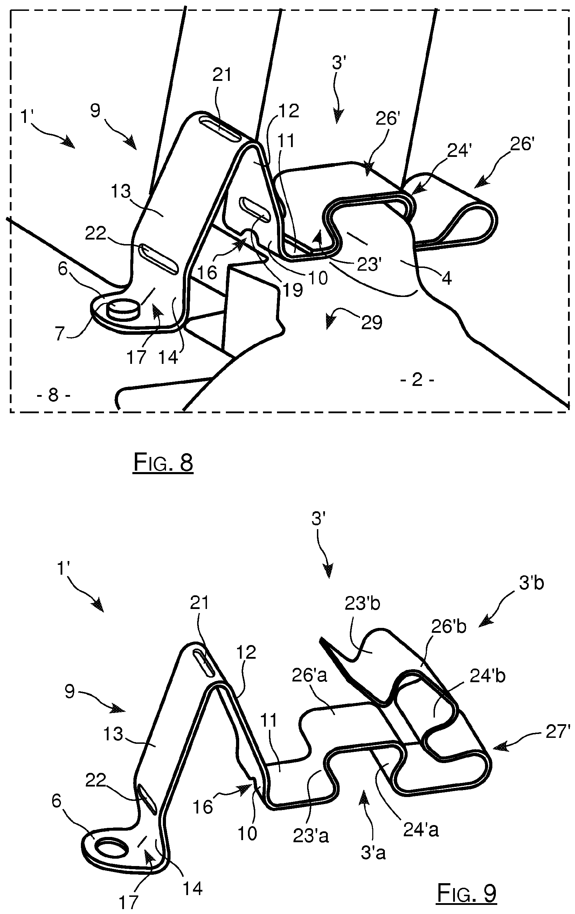

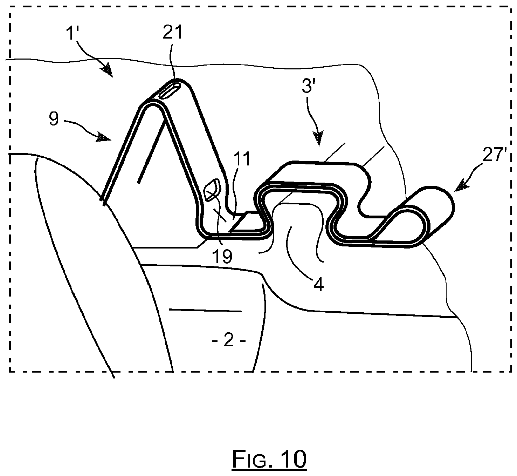

Dans le second mode de réalisation, le ressort qui apparaît sur les figures 8 à 10 où il est repéré par 1', est aussi formé à partir d'une lame de tôle d'acier rectangulaire découpée et pliée ou emboutie.

Il comporte aussi une pince de fixation, repérée par 3', par laquelle il est fixé à la nervure 4 de la chape 2, et une patte 6 fixée par un rivet 7 à la plaquette de freinage 8, cette pince 3' étant raccordée à la patte 6 par une partie déformable 9 identique à celle du premier mode de réalisation. Cette partie 9 a ainsi une forme de V comprenant une première portion droite 10 à angle droit par rapport à une portion d'appui 11 qu'elle prolonge et par laquelle elle est raccordée à la pince 3'.

La première portion droite 10 est prolongée par une première portion oblique 12, elle-même prolongée par une seconde portion oblique 13 prolongée par une seconde portion droite 14 prolongée par la patte 6. Un premier raidisseur 16 est situé à la jonction de la portion d'appui 11 avec la portion droite 10, et un deuxième raidisseur 17 est situé à la jonction de la seconde portion droite 14 avec la patte 6.

Chaque raidisseur 16, 17 est obtenu par pliage ou emboutissage pour former une nervure raidissant la pliure à angle droit constituant la jonction de deux portions contiguës, en étant formé en partie centrale de cette pliure selon une orientation perpendiculaire à celle-ci.

Des fentes 19, 21 et 22 sont situées au niveau des raccordements, respectivement de la première portion droite avec la première portion oblique ; des deux portions obliques; de la seconde portion oblique avec la seconde portion droite. Elles confèrent au ressort la capacité de se déformer de façon plastique au cours de la vie du frein, de la même manière qu'illustré sur la figure 2 pour le cas du premier mode de réalisation.

La pince 3' a une forme générale similaire à celle de la pince 3 du premier mode de réalisation, mais en ayant une épaisseur doublée pour accroître sa rigidité. Cette pince 3' comporte deux bras 23', 24' réunis par une base 26' pour enserrer la nervure 4 de la chape 2, cette base et ces bras ayant en vue de profil une forme correspondant à celle de la lettre U.

A la différence de la pince 3, la pince 3' est doublée, c'est-à-dire formée de deux épaisseurs de tôle, contrairement au reste du ressort et en particulier sa partie déformable 9 qui présente une épaisseur simple. La pince 3' présente ainsi une rigidité qui vaut sensiblement le double de celle du reste du ressort, pour exercer un effort de serrage plus élevé afin d'assurer une fixation optimale du ressort à la chape 2.

Le ressort 1' est lui aussi fabriqué à partir d'une bande de tôle en acier à ressort, qui comprend une portion principale dans laquelle sont constitués la partie déformable 9, et un corps de pince repéré par 3'a, prolongé par un rabat 3'b. Le rabat 3'b comporte des cintrages et pliures sensiblement identiques à ceux du corps 3'a, pour s'emboîter sur celui-ci afin d'en doubler l'épaisseur.

Le corps de pince 3'a comporte deux bras 23'a et 24'a réunis par une base 26'a ayant la forme de la lettre U. Le bras 23'a a son extrémité opposée à la base 26'a qui est repliée à angle droit pour constituer la portion d'appui 11 par laquelle la pince 3' est en appui sur une face 29 de la chape 2 dont dépasse la nervure 4, cette portion d'appui 11 étant raccordée à la patte 6 par la partie déformable 9.

Le bras 24'a a son extrémité libre qui est repliée à angle droit pour être prolongée par une boucle terminale 27' s'étendant globalement en direction opposée à la patte 6, et par l'intermédiaire de laquelle il est raccordé au rabat 3'b.

Ce rabat 3'b présente une forme très proche de celle du corps de pince 3'a : il comporte lui aussi deux bras 23'b, 24'b réunis par une base 26'b formant la lettre U, le bras 24'b a son extrémité opposée à la base 26'b qui est repliée à angle droit pour constituer la terminaison du rabat 3'b. Le bras 24'b a son extrémité libre, c'est-à-dire opposée à la base 26'b qui est repliée à angle droit et prolongée par la boucle terminale 27' le reliant au corps de pince 3'a.

Un fois que le ressort 1' a été mis en forme par découpage, pliage et/ou emboutissage, le rabat 3'b est rabattu et emboîté sur le corps de pince 3'a, de sorte que ces deux parties sont rigidement solidarisées l'une à l'autre pour constituer la pince 3', présentant une rigidité élevée.

### NOMENCLATURE

**[Table 1]**

| | | | |
|---|---|---|---|
| 1 : | ressort | 24 : | bras |
| 2 : | chape | 24' : | bras |
| 3 : | pince | 24'a : | bras |
| 3' : | pince | 24'b : | bras |
| 4 : | nervure | 26 : | base |
| 6 : | patte | 26' : | base |
| 7 : | rivet | 26'a : | base |
| 8 : | plaquette de freinage | 26'b : | base |
| 9 : | partie déformable | 27 : | extrémité libre |
| 10 : | première portion droite | 27' : | boucle |
| 11 : | portion d'appui | 29 : | face |
| 12 : | première portion oblique | 28 : | troisième raidisseur |
| 13 : | seconde portion oblique | 31 : | portion centrale |
| 14 : | seconde portion droite | D : | distance |
| 16 : | premier raidisseur | C : | courbe |
| 17 : | deuxième raidisseur | A% : | déformation relative |
| 19 : | fente | S : | contrainte mécanique |
| 21 : | fente | Rei : | limite élastique initiale |
| 22 : | fente | Rr : | limite de rupture |
| 23 : | bras | Ree : | limite élastique après écrouissage |
| 23': | bras | | |
| 23'a : | bras | E1 : | domaine élastique initial |
| 23'b : | bras | E2 : | domaine élastique écroui |

## Revendications

1. Ressort de rappel (1 ; 1') d'une plaquette (8) de frein à disque dans un chape de frein à disque, fabriqué en tôle d'acier à ressort en étant configuré pour se déformer élastiquement pour rappeler la plaquette (8) vers une position de retrait après freinage et pour se déformer plastiquement afin de compenser l'usure de la plaquette (8) en permettant une évolution de la position de retrait au fil de l'usure de la plaquette, ce ressort de rappel (1 ; 1') comprenant une patte de fixation (6) à la plaquette (8) et une pince (3 ; 3') de fixation à la chape, **caractérisé en ce que** cette pince (3 ; 3') comprend deux bras (23, 24 ; 23', 24') réunis par une base (26 ; 26') pour enserrer une nervure (4) de la chape, et dans lequel cette pince (3 ; 3') est renforcée pour accroître son effort de serrage,
dans lequel la pince (3) étant renforcée par écrouissage au niveau de sa base (26) par frappe sur une portion centrale (31) de la base (26) pour en réduire l'épaisseur, ou dans lequel la pince (3') est renforcée en ayant une épaisseur supérieure à celle du reste du ressort (1').

2. Ressort (1) selon la revendication précédente, dans lequel l'un des bras (24) de la pince 3 comporte une extrémité (27) repliée pour que sa tranche vienne en appui sur un flanc de la nervure (4) de la chape en constituant une griffe.

3. Ressort (1') selon la revendication 1, dans lequel la pince (3') est renforcée en étant formée de deux épaisseurs de tôle.

4. Ressort (1') selon la revendication 3, dans lequel la pince (3') comporte un corps de pince (3'a) prolongé par un rabat (3'b) qui est emboîté sur le corps de pince (3'a).

5. Frein à disque comportant un ressort (1 ; 1') tel que défini dans l'une quelconque des revendications précédentes.

## Patentansprüche

1. Rückholfeder (1; 1') für einen Scheibenbremsbelag (8) bei einem Scheibenbremsen-Gabelkopf, die aus einem Federstahlblech hergestellt ist, indem sie dazu ausgestaltet ist, sich elastisch zu deformieren, um den Bremsbelag (8) nach dem Bremsen in eine zurückgezogene Position zurückzuholen, und sich plastisch zu deformieren, um den Verschleiß des Bremsbelags (8) auszugleichen, indem sie eine Veränderung der zurückgezogenen Position im Laufe des Verschleißes des Bremsbelags gestattet, wobei diese Rückholfeder (1; 1') eine Lasche (6) zur Befestigung an dem Bremsbelag (8) und eine Klammer (3; 3') zur Befestigung an dem Gabelkopf umfasst, **dadurch gekennzeichnet, dass** diese Klammer (3; 3') zwei Arme (23, 24; 23', 24') umfasst, die mittels einer Basis (26; 26') verbunden sind, um einen Steg (4) des Gabelkopfs zu umklammern, und wobei diese Klammer (3; 3') verstärkt ist, um ihre Klemmkraft zu erhöhen,
wobei die Klammer (3) mittels Kaltverfestigung an ihrer Basis (26) durch Hämmern eines mittleren Abschnitts (31) der Basis (26) verstärkt wird, um deren Dicke zu reduzieren, oder wobei die Klammer (3') verstärkt wird, indem sie eine höhere Dicke als die restliche Feder (1') hat.

2. Feder (1) nach dem vorhergehenden Anspruch, wobei einer der Arme (24) der Klammer (3) ein Ende (27) aufweist, das umgebogen ist, so dass seine Schmalseite unter Bildung einer Klaue in Anlage an einer Flanke des Stegs (4) des Gabelkopfs kommt.

3. Feder (1') nach Anspruch 1, wobei die Klammer (3') verstärkt ist, indem sie aus zwei Blechdicken gebildet ist.

4. Feder (1') nach Anspruch 3, wobei die Klammer (3') einen Klammerkörper (3'a) aufweist, der in eine Klapplasche (3'b) übergeht, die auf dem Klammerkörper (3'a) aufgesteckt ist.

5. Scheibenbremse, aufweisend eine Feder (1; 1') nach einem der vorhergehenden Ansprüche.

## Claims

1. Return spring (1; 1') for a disc brake pad (8) in a disc brake yoke, made of spring sheet steel and being configured to deform elastically to return the pad (8) to a retracted position after braking and to deform plastically in order to compensate for the wear of the pad (8) by allowing an evolution of the retracted position as the pad wears, this return spring (1; 1') comprising a lug (6) for attaching to the pad (8) and a clip (3 ; 3') for attaching to the yoke, **characterised in that** this clip (3; 3') comprises two arms (23, 24; 23', 24') joined by a base (26; 26') to surround a rib (4) of the yoke, and wherein this clip (3; 3') is reinforced to increase its clipping force,
wherein the clip (3) is reinforced by strain hardening its base (26) by striking a central portion (31) of the base (26) to reduce its thickness, or wherein the clip (3') is reinforced to have a greater thickness than the rest of the spring (1').

2. Spring (1) according to the preceding claim, wherein one of the arms (24) of the clip (3) includes an end (27) which is bent so that its edge bears on a flank of the rib (4) of the yoke to form a claw.

3. Spring (1') according to claim 1, wherein the clip (3') is reinforced by being formed of two layers of sheet metal.

4. Spring (1') according to claim 3, wherein the clip (3') includes a clip body (3'a) extended by a flap (3'b) which is fitted onto the clip body (3'a).

5. Disc brake with a spring (1; 1') as defined in any of the preceding claims.
